# FASCICULE DE BREVET EUROPEEN

(11) **EP 1 946 552 B1**
(45) Date de publication et mention de la délivrance du brevet: **27.08.2014**
(21) Numéro de dépôt: 06829929.6
(22) Date de dépôt: 02.11.2006
(51) Int. Cl.: H04N 7/16

(54) **MÉTHODE DE SÉCURISATION DE DONNÉES ÉCHANGÉES ENTRE UN DISPOSITIF DE TRAITEMENT MULTIMÉDIA ET UN MODULE DE SÉCURITÉ**
VERFAHREN ZUM SICHERN VON ZWISCHEN EINER MULTIMEDIA-VERARBEITUNGSEINRICHTUNG UND EINEM SICHERHEITSMODUL AUSGETAUSCHTEN DATEN
METHOD FOR SECURING DATA EXCHANGED BETWEEN A MULTIMEDIA PROCESSING DEVICE AND A SECURITY MODULE

(30) Priorité: 03.11.2005 EP 05110316
(43) Date de publication de la demande: 23.07.2008
(73) Titulaire: Nagravision SA, 1033 Cheseaux-sur-Lausanne (CH)
(72) Inventeur: MOREILLON, Guy, CH-1042 Bioley-Orjulaz (CH); FISCHER, Nicolas, CH-1290 Versoix (CH); KEYCHENKO, Nikolai, CH-1005 Lausanne (CH); WENGER, Joel, CH-1295 Mies (CH)
(74) Mandataire: Leman Consulting S.A.
(86) Numéro de dépôt international: PCT/EP2006/068041
(87) Numéro de publication internationale: WO 2007/051823

(56) Documents cités:
- WO-A-2005/081526
- WO-A1-99/18729
- US-A1- 2004 088 558
- US-A1- 2005 111 666
- SOCIETY OF CABLE TELECOMMUNICATIONS ENGINEERS, INC: "Copy Protection for POD Module Interface", SCTE DVS/213, 1 June 1999 (1999-06-01), XP040400335,

## Description

### Introduction

La présente invention concerne le domaine des décodeurs pour télévision à péage, en particulier les décodeurs disposant d'un module de sécurité pour assurer les fonctions d'autorisation.

### Etat de la technique

Un décodeur de télévision à péage comprend schématiquement un récepteur capable de recevoir et mettre en forme des signaux de diverses sources tels que satellite, câble, réseau IP; une unité de filtrage capable d'extraire un ou plusieurs flux de données parmi la multitude des flux possibles; une unité centrale en charge de gérer l'ensemble et d'assurer l'interface utilisateur; un modulateur pour transmettre les signaux en clair vers un organe de visualisation; ainsi qu'un module de déchiffrement et de décompression qui reçoit le flux de données encryptées provenant de l'unité de filtrage et transmet les données en clair au démodulateur, ce module ayant la tâche de déchiffrer le flux de données et de décompresser lesdites données selon un format standard tel que DVB.

Il est à noter que physiquement, le module de déchiffrement et de décompression est placé sur le même support que le modulateur de telle sorte que les données en clair ne soient pas accessibles après leur déchiffrement. Un tel décodeur est relié à une unité de sécurité qui peut prendre plusieurs formes telles qu'une carte à puce, une carte SIM, un module électronique de forme quelconque dont la liaison avec le décodeur peut être soit avec ou sans contacts.

Un décodeur peut prendre de nombreuses formes telles que le bien connu appareil posé à côté du téléviseur mais également peut être sous la forme de dispositifs portables, tels que Palm, téléphone 3^{ème} génération ou iPod™.

Pour assurer la sécurité des échanges entre le module de sécurité et le décodeur, les données transmises par le module de sécurité sont encryptées par une clé propre à chaque décodeur. Une telle solution est décrite dans le document WO99/57901A1. Les clés nécessaires au déchiffrement d'un contenu audio ou vidéo sont donc extraites de messages de sécurité que seul peut décrypter ce module après vérification des droits.

Ces clés ou mots de contrôle sont encryptés avec une clé propre au couple module de sécurité / décodeur et transmis au décodeur.

Afin de renforcer la sécurité notamment dans le décodeur, les mots de contrôle ne sont décryptés que dans le module de déchiffrement. Chacun de ces modules dispose d'une clé propre qui est communiquée au module de sécurité par des moyens sécurisés administrés par un centre de gestion. Un tel exemple est également illustré dans le document WO2004/010698 dans lequel une clé de déchiffrement est directement localisée dans le module de déchiffrement du flux, cette clé permettant de décrypter les clés envoyées par un module de sécurité.

Les procédures d'établissement d'une clé d'encryption du canal entre le décodeur et le module de sécurité sont basées sur la connaissance d'un secret commun (voir document WO03107585 ou US2004/0088558). Ainsi, si un décodeur doit pouvoir recevoir des données de plusieurs modules de sécurité, chaque module doit disposer du secret initial pour créer ce canal sécurisé.

Le document XP040400335 de la SCTE (Society of Cable Telecommunications Engineers, Inc), intitulé « Copy Protection for POD Module Interface » SCTE DVS/213, 1er juin 1999, décrit un mécanisme de protection d'un contenu échangé entre un module de sécurité et un dispositif hôte. Pour ce faire, le module déchiffre un contenu (issu par exemple de divers services) et re-chiffre à nouveau ce contenu à l'aide d'une clé partagée par l'hôte et par le module. Le module et l'hôte possède chacun une clé privée ainsi que la clé publique correspondante. Ils e communiquent mutuellement leur clé publique et utilisent chacun la clé publique de l'autre pour pouvoir former la clé partagée à partir de leur propre clé privée. Ainsi la clé partagée est déterminée à partir de deux clés, à savoir une clé publique et d'une clé privée.

Le document WO 99/18729 décrit une méthode et un dispositif pour la transmission et la réception de données chiffrées dans laquelle le flux de mots de commande déchiffré est re-encrypté avant d'être retourné au décodeur par le module de sécurité. Cette re-encryption est effectué en utilisant une clé partagée qui dépend d'une valeur N associée à l'identification du décodeur. Cette valeur est utilisée pour diversifier la clé partagée, connue par avance du décodeur et du module de sécurité. Le décodeur déchiffrera le flux à l'aide de cette clé et de cette valeur. L'obtention de la clé partagée résulte d'une transmission préalable au terme de laquelle elle est stockée à demeure dans la mémoire morte du décodeur.

Pour établir un canal sécurisé entre un décodeur et un module de sécurité, le document US 2004/088558 suggère le l'utilisation d'une succession de clés hiérarchisées. Pour ce faire il décrit un dispositif désembrouilleur utilisant une clé unique qui lui est propre ainsi qu'un circuit logique permettant de générer une succession de trois valeurs interdépendantes dont la première, fonction de la clé unique et d'une valeur aléatoire, sert de clé de chiffrement d'un contenu et dont la troisième valeur, déduite de la seconde valeur, sert de clé de déchiffrement du contenu chiffré. En variante, une clé d'appariement impliquant la première valeur peut être utilisée pour l'obtention de la seconde valeur.

Le document US 2005/0111666 propose une méthode visant à éviter le recours systématique d'une même clé de sécurité dans le chiffrement, par un algorithme initial, des communications entre deux appareils. Pour ce faire, il est proposé de modifier cette clé de sécurité sur la base d'un identifiant d'algorithme et d'une clé initialement partagée lors d'une procédure d'accord de clé entre ces deux appareils.

Le besoin d'interactivité étant grandissant, il est devenu nécessaire d'ouvrir l'utilisation d'un même décodeur à plusieurs opérateurs ou plusieurs entités, une entité constituant un groupe de décodeurs liés par un même dénominateur commun (régional, type de contrat, version du matériel etc.). Ceci force bien sûr la dissémination de la clé secrète du module de déchiffrement parmi les différentes entités. Si une des entités est l'objet d'une fuite, on imagine le tort que cela crée non seulement pour cette entité, mais pour toutes les entités.

### Brève description de l'invention

Le but de la présente invention est de proposer une méthode de création d'un canal sécurisé et authentifié entre un dispositif de traitement multimédia et un module de sécurité pouvant être partagé entre plusieurs entités, les données transmises à une entité ne compromettant pas les autres entités.

Ce but est atteint par une méthode conforme à l'énoncé de la revendication 1.

Ainsi, une clé de sécurité différente est générée pour chaque groupe de module de sécurité permettant le dialogue avec le même dispositif de traitement multimédia.

Ceci a l'avantage qu'aucune entité ne dispose de la clé personnelle du dispositif de traitement multimédia tout en pouvant échanger des données sécurisées avec ledit module de sécurité.

La fonction à sens unique peut être de différents types tels que par exemple une fonction de hachage (SHA, MD2, MD5, HMAC), une fonction de hachage avec clé (HMAC) ou une fonction d'encryption, l'identifiant d'opérateur étant encrypté par la clé personnelle du dispositif de traitement multimédia.

### Brève description de la figure

L'invention sera mieux comprise grâce à la description détaillée qui va suivre et qui se réfère au dessin annexé qui est donné à titre d'exemple nullement limitatif, et représente un dispositif de traitement multimédia pouvant être connecté à deux modules de sécurité.

### Description détaillée de l'invention

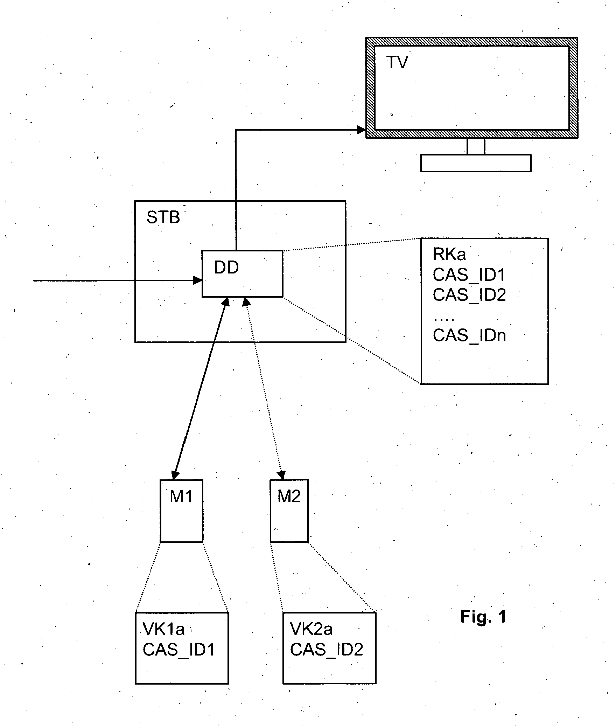

La description détaillée se réfère à la figure 1. Le cadre de cette invention est la possibilité de sécuriser un canal de communication tout en assurant la gestion par un centre de gestion. Ce centre de gestion dispose de la liste des clés personnelle relatives aux dispositifs de traitement multimédia. Pour la suite de l'exposé, nous parlerons d'un décodeur STB tel qu'illustré sur la figure 1.

Ce décodeur STB comprend un module de déchiffrement et de décompression DD qui reçoit les données multimédia sous forme encryptées et qui les traite afin de les rendre utilisable à un organe de visualisation telle qu'une télévision TV.

Pour effectuer une décryption des données, il est nécessaire de disposer des clés de décryption qui sont fournies par un modulè de sécurité M. Le canal entre le module de sécurité M et le module DD ést encrypté par une clé de sécurité afin d'éviter qu'une dé de décryption puisse être utilisée par plus d'un décodeur. C'est la manière de générer cette clé qui est ici décrite.

Un centre de gestion est sollicité pour l'établissement des paramètres de sécurité entre une entité donnée et un décodeur. La première opération est d'attribuer à cette entité un identifiant CAS_ID qui lui et propre. La seconde opération est d'identifier un décodeur et par-là même, connaître sa clé personnelle RK.

Sur la base de ces deux informations, le centre de gestion va calculer une clé de sécurité VK par une fonction à sens unique utilisant ces deux informations. La solution la plus simple est une fonction de hachage (Hash) sur le bloc formé de l'identifiant de l'entité et de la clé personnelle (HMAC). Ce résultat constitue la clé de sécurité VK et sa connaissance par l'opérateur ne lui permet pas de retrouver la clé personnelle RK.

Cette clé de sécurité VK est alors chargée dans le module de sécurité M, soit à l'initialisation, soit lors d'une phase de mise en service par l'envoi de messages de gestion par l'entité, via les données multimédia.

Pour qu'un décodeur puisse générer la clé de sécurité VK, il doit connaître l'identifiant de l'entité CAS_ID. Cette information peut être obtenue de plusieurs manières, par exemple par l'extraction de données qui sont dans le flux de données multimédia. Dans le cas où ce décodeur est destiné à recevoir un flux de données d'une seule source, il est possible de placer dans ce flux l'information de l'identifiant de l'entité.

Selon un autre mode de réalisation, c'est le module de sécurité M qui va communiquer cette information au module de déchiffrement et de décompression DD. C'est ce second mode qui a été choisi pour illustrer la présente demande sans exclure la fonctionnalité selon le premier mode.

Lorsqu'un module de sécurité souhaite dialoguer avec un décodeur STB, par exemple le module M1, et en particulier avec son module de déchiffrement et de décompression DD, ce module envoie son identifiant d'entité CAS_ID1 au module de déchiffrement et de décompression DD. Ce dernier va calculer la même fonction à sens unique qu'effectuée par le centre de gestion et obtenir la clé de sécurité VK1a. Cette clé est utilisée pour décrypter les données reçues du module de sécurité M1. Si ce module ne dispose pas de cette clé pour encrypter les informations, les données obtenues du coté du module de déchiffrement et de décompression DD seront incompréhensibles. Pour éviter toute détérioration du matériel, il est possible d'ajouter une phase de vérification dès lors que la clé de sécurité est déterminée par le module de déchiffrement et de décompression DD. Ainsi, il est spécifié que le prochain message produit par le module de sécurité est une valeur de référence (par exemple 01010101B) encrypté par la clé de sécurité VK1a. Si cette valeur n'est pas reçue par le module de déchiffrement et de décompression DD, tout traitement est interrompu. Dans un mode plus élaboré, le module de déchiffrement et de décompression DD génère un nombre aléatoire N et l'encrypte avec la clé de sécurité et envoie ce cryptogramme au module de sécurité. Ce dernier décrypte le cryptogramme pour en obtenir le nombre aléatoire N. Il applique une fonction convenue sur le nombre aléatoire (une addition, soustraction, XOR etc.) pour obtenir N'. Le module de sécurité encrypte N' avec la clé de sécurité et envoie ce cryptogramme au module de déchiffrement et de décompression DD. Ce dernier décrypte le cryptogramme et vérifie la relation entre le nombre aléatoire généré N et celui reçu N'. Si la relation est celle qui a été convenue, ceci signifie que les deux parties disposent de la même clé.

Selon un mode de réalisation, l'identifiant de l'entité peut être étendu à un identifiant de module de sécurité. En effet, le centre de gestion connaissant le décodeur concerné donc son module de déchiffrement et de décompression DD et le module de sécurité qui est destiné à interagir avec ce décodeur, peut générer une clé de sécurité qui serait une fonction d'un identifiant de module de sécurité et de la clé personnelle du module de déchiffrement et de décompression DD. Cette fonction crée un appariement entre le module de sécurité M1 et le module de déchiffrement et de décompression DD.

Selon une variante de cette réalisation, l'identifiant de module de sécurité est formé de deux parties, soit d'un identifiant d'opérateur et d'un identifiant propre à ce module dans la classification de l'entité.

Cette manière de coder l'identifiant sera utile pour les modes de réalisation impliquant la vérification de l'identifiant dans une liste, seule la partie de l'identifiant relative à l'entité sera vérifiée par le module de déchiffrement et de décompression DD.

Selon une variante de réalisation, le module de déchiffrement et de décompression DD comprend des moyens de vérification de la conformité du module de sécurité M qui lui est connecté. A cet effet, le module de déchiffrement et de décompression DD comprend une liste des identifiants admis à la création de la clé de sécurité telle qu'illustré dans la figure 1 par la liste des CAS_ID. Dans ce cas elle est dite positive car comprenant les CAD_ID valides ou elle peut être négative car comprenant la liste des CAD_ID interdits.

Il existe de nombreuses manières de gérer cette liste et nous allons expliciter certaines de ces manières.

### Liste à fusible

Dans un premier temps, chaque module de déchiffrement et de décompression DD comprend une liste de par exemple 100 identifiants CAD_ID1... CAS_ID100. Le centre de gestion peut insérer dans le flux de données multimédia des commandes de désactivation d'un ou plusieurs identifiants ce qui va avoir pour conséquence d'effacer définitivement un ou plusieurs identifiants. Ceci aura pour effet que ces identifiants ne seront plus admis à créer une clé de sécurité avec un module de sécurité.

Ces commandes de désactivation sont de préférence encryptées ou signées par une clé qui serait commune à tous les modules de déchiffrement et de décompression DD.

### Liste évolutive

Le flux de données multimédia comprend des informations permettant de former cette liste. A l'origine, aucun identifiant n'est admis (éventuellement un identifiant par défaut CAD_ID1) et des commandes permettent de programmer les identifiants autorisés ou effacer les identifiants révoqués. Le résultat de ces commandes est stocké dans une mémoire non volatile. De même que précédemment, ces commandés sont de préférence encryptées ou signées par une clé commune à tous les modules de déchiffrement et de décompression DD.

Selon un mode de réalisation, le module de déchiffrement et de décompression DD comprend une mémoire volatile qui est vide lors de chaque enclenchement. Ainsi, cette mémoire est chargée avec les identifiants reçus dans le flux de données multimédia courant. Ceci permet de relier un flux de données multimédia à un ensemble d'identifiants d'entités donné. Ces identifiants sont placés dans une table et font partie du flux d'information SI. Ainsi il est possible de faire évoluer cette table durant une même session de diffusion et avec elle, la liste des entités autorisées. Le module de déchiffrement et de décompression DD mémorise l'identifiant de l'entité avec lequel il a créé une clé de sécurité et lorsque la table des identifiants change, il vérifie que l'identifiant courant est toujours compris dans la nouvelle table. Dans la négative, il stoppe la réception des données transmises par ce module de sécurité et demande une nouvelle phase d'initialisation de la clé de sécurité.

## Revendications

1. Méthode de sécurisation de données échangées entre un dispositif de traitement multimédia (STB) et un module de sécurité (M), le module de sécurité (M) étant administré par un centre de gestion disposant d'une liste de clés personnelles (RK) relatives à des dispositifs de traitement multimédia, le centre de gestion étant sollicité pour l'établissement des paramètres de sécurité entre ledit dispositif de traitement multimédia (STB) et un opérateur, le dispositif de traitement multimédia (STB) recevant un flux de données multimédia encryptées et étant en charge de décrypter et convertir ces données à l'aide de clés de décryption fournies par le module de sécurité (M) pour les rendre exploitable, ledit dispositif de traitement multimédia (STB) comprenant une clé personnelle (RK), cette méthode comprend les étapes suivantes:
- calcul, par le centre de gestion, d'une clé de sécurité (VK) formée par une opération à sens unique basée sur la clé personnelle (RK) du dispositif de traitement multimédia (STB) et d'un identifiant (CAS_ID) attribué par ledit centre de gestion à l'opérateur,
- chargement de ladite clé de sécurité (VK) dans le module de sécurité (M), ledit module de sécurité contenant aussi l'identifiant (CAS_ID),
- obtention, par le dispositif de traitement multimédia (STB), de l'identifiant (CAS_ID) contenu dans ledit module de sécurité (M),
- calcul, par ledit dispositif de traitement multimédia (STB), de ladite clé de sécurité (VK) par une opération à sens unique basée sur la clé personnelle (RK) dudit dispositif de traitement multimédia (STB) et de l'identifiant (CAS_ID) obtenu par le dispositif de traitement multimédia,
- utilisation de la clé de sécurité (VK) pour sécuriser les données échangées entre le dispositif de traitement multimédia (STB) et le module de sécurité (M).

2. Méthode selon la revendication 1, **caractérisée en ce que** le module de sécurité (M) transmet l'identifiant (CAS_ID) audit dispositif de traitement multimédia (STB).

3. Méthode selon la revendication 1, **caractérisée en ce que** le dispositif de traitement multimédia (STB) obtient l'identifiant (CAS_ID) par extraction dudit identifiant (CAS_ID) du flux de données reçu.

4. Méthode selon les revendications 1 à 3, **caractérisée en ce que** le dispositif de traitement multimédia (STB) comprend un module de déchiffrement et de décompression (DD) dans lequel est initialisée la clé personnelle (RK).

5. Méthode selon la revendication 4, **caractérisée en ce qu'**elle comprend une étape de vérification de l'identité de la clé de sécurité (VK) dans le module de sécurité (M) et dans le module de déchiffrement et de décompression (DD) par l'encryption avec ladite clé d'un message contenant au moins une partie prédéfinie par le module de sécurité (M), et vérification de cette partie prédéfinie après décryption par le module de déchiffrement et de décompression (DD).

6. Méthode selon l'une des revendications 1 à 5, **caractérisée en ce que** l'opération à sens unique est une fonction de type hash ou hash MAC.

7. Méthode selon l'une des revendications 1 à 5, **caractérisée en ce que** l'opération à sens unique est une fonction d'encryption de l'identifiant (CAS_ID) par la clé personnelle (RK).

8. Méthode selon l'une des revendications 4 à 7, **caractérisée en ce que** le module de déchiffrement et de décompression (DD) comprend une liste d'identifiants (CAS_ID1...CAS_IDn), ce module de déchiffrement et de décompression (DD) vérifiant la conformité de l'identifiant reçu du module de sécurité (M) par rapport à cette liste.

9. Méthode selon la revendication 8, **caractérisée en ce que** le dispositif de traitement multimédia (STB) reçoit des données multimédia comprenant les données permettant de composer cette liste d'identifiants (CAS_ID1...CAS_IDn).

10. Méthode selon les revendications 8 ou 9, **caractérisée en ce que** le module de déchiffrement et de décompression (DD) comprend une clé pour décrypter ou vérifier la signature des données de la liste transmise.

11. Méthode selon l'une des revendications 8 à 9, **caractérisée en ce que** la liste d'identifiants (CAS_ID1...CAS_IDn) est une liste dite positive c'est-à-dire comprenant les identifiants autorisés à la création de la clé personnelle.

12. Méthode selon l'une des revendications 8 à 9, **caractérisée en ce que** la liste d'identifiants (CAS_ID1...CAS_IDn) est une liste dite négative c'est-à-dire comprenant les identifiants interdits à la création de la clé personnelle.

13. Module de déchiffrement et de décompression (DD) destiné à être monté dans un dispositif de traitement multimédia (STB) et comprenant une unité centrale, un module de déchiffrement, un module de décompression, au moins une clé personnelle (RK), des moyens de génération d'une clé sécurisée (VK) calculée à partir d'une fonction à sens unique basée sur la clé personnelle (RK) et sur un identifiant (CAS_ID) contenu dans un module de sécurité (M) et reçu par ledit module de déchiffrement et de décompression (DD), ledit module de sécurité (M) étant destiné à être connecté au dispositif de traitement multimédia (STB) pour assurer des fonctions d'autorisation, **caractérisé en ce qu'**il est en outre destiné à recevoir dudit module de sécurité (M) des données encryptées par une même clé de sécurité (VK) calculée par un centre de gestion et chargée dans ledit module de sécurité (M).

14. Module de déchiffrement et de décompression (DD) selon la revendication 13, **caractérisé en ce qu'**il comprend une mémoire contenant une liste d'identifiants (CAS_ID1...CAS_IDn) et des moyens de vérification de conformité de l'identifiant reçu du module de sécurité par rapport à cette liste.

15. Module de déchiffrement et de décompression (DD) selon la revendication 13 ou 14, **caractérisé en ce qu'**il comprend une clé commune et des moyens pour décrypter ou vérifier la liste des identifants (CAS_ID1...CAS_IDn) reçus.

## Patentansprüche

1. Verfahren zur Sicherung von Daten, die zwischen einer Multimedia-Verarbeitungsanlage (STB) und einem Sicherheitsmodul (M) ausgetauscht werden, wobei das Sicherheitsmodul (M) von einem Verwaltungszentrum verwaltet wird, das über eine Liste von persönlichen Schlüsseln (RK) für Multimedia-Behandlungsvorrichtungen verfügt, wobei das Verwaltungszentrum für die Aufstellung der Sicherheitsparameter zwischen der Multimedia-Verarbeitungsanlage (STB) und einem Bediener zuständig ist; die Multimedia-Verarbeitungsanlage (STB) empfängt einen verschlüsselten Multimediadatenfluss und hat die Aufgabe, diese Daten mit Hilfe von Entschlüsselungsschlüsseln, die vom Sicherheitsmodul (M) geliefert werden, zu entschlüsseln und umzuwandeln, um sie nutzbar zu machen, besagte Multimedia-Verarbeitungsanlage (STB) umfasst einen persönlichen Schlüssel (RK), wobei dieses Verfahren die folgenden Schritte umfasst:
- Berechnung, durch das Verwaltungszentrum, eines Sicherheitsschlüssels (VK), gebildet durch eine unidirektionale Operation, basierend auf dem persönlichen Schlüssel (RK) der Multimedia-Verarbeitungsanlage (STB) und auf einer Kennung (CAS ID), die dem Bediener vom Verwaltungszentrum zugeteilt wird,
- Laden des Sicherheitsschlüssels (VK) in das Sicherheitsmodul (M), das auch die Kennung (CAS ID) enthält,
- Erhalt der in besagtem Sicherheitsmodul (M) enthaltenen Identifizierung (CAS ID) durch die Multimedia-Verarbeitungsanlage (STB),
- Berechnung, durch besagte Multimedia-Verarbeitungsanlage (STB), des besagten Sicherheitsschlüssels (VK) durch eine unidirektionale Operation, basierend auf dem persönlichen Schlüssel (RK) der Multimedia-Verarbeitungsanlage (STB) und der Identifizierung (CAS ID), die die Multimedia-Verarbeitungsanlage erhalten hat,
- Benutzung des Sicherheitsschlüssels (VK), um die zwischen der Multimedia-Verarbeitungsanlage (STB) und dem Sicherheitsmodul (M) ausgetauschten Daten zu sichern.

2. Verfahren nach Anspruch 1, **gekennzeichnet dadurch, dass** das Sicherheitsmodul (M) die Kennung (CAS ID) an die genannte Multimedia-Verarbeitungsanlage (STB) überträgt.

3. Verfahren nach Anspruch 1, **gekennzeichnet dadurch, dass** die Multimedia-Verarbeitungsanlage (STB) die Kennung (CAS ID) durch Extraktion der genannten Kennung (CAS ID) aus dem empfangenen Datenfluss erhält.

4. Verfahren nach den Ansprüchen 1 bis 3, **gekennzeichnet dadurch, dass** die Multimedia-Verarbeitungsanlage (STB) ein Dekompressions- und Entschlüsselungsmodul (DD) umfasst, in dem der persönliche Schlüssel (RK) initialisiert wird.

5. Verfahren nach Anspruch 4, **dadurch gekennzeichnet, dass** es eine Phase der Prüfung der Identität des Sicherheitsschlüssels (VK) in dem Sicherheitsmodul (M) und in dem Dekompressions- und Entschlüsselungsmodul (DD) umfasst, durch die Verschlüsselung, mit besagtem Schlüssel, einer Nachricht, die mindestens einen durch das Sicherheitsmodul (M) vorherbestimmten Teil enthält, und Prüfung dieses vorherbestimmten Teils nach der Entschlüsselung durch das Dekompressions- und Entschlüsselungsmodul (DD).

6. Verfahren nach einem der Ansprüche 1 bis 5, **gekennzeichnet dadurch, dass** die unidirektionale Operation eine Hash- oder MAC-Hash-Funktion ist.

7. Verfahren nach einem der Ansprüche 1 bis 5, **gekennzeichnet dadurch, dass** die unidirektionale Operation eine Funktion zur Verschlüsselung der Kennung (CAS ID) durch den persönlichen Schlüssel (RK) ist.

8. Verfahren nach einem der Ansprüche 4 bis 7, **gekennzeichnet dadurch, dass** das Dekompressions- und Entschlüsselungsmodul (DD) eine Liste von Identifizierungen (CAS ID1...CAS IDn) umfasst, w o b ei das Dekompressions- und Entschlüsselungsmodul (DD) die Konformität der vom Sicherheitsmodul (M) empfangenen Identifizierung mit dieser Liste nachprüft.

9. Verfahren nach Anspruch 8, **gekennzeichnet dadurch, dass** die Multimedia-Verarbeitungsanlage (STB) Multimediadaten mit den Daten empfängt, mit denen diese Liste von Identifizierungen (CAS ID1...CAS IDn) zusammengesetzt werden kann.

10. Verfahren nach den Ansprüchen 8 oder 9, **gekennzeichnet dadurch, dass** das Dekompressions- und Entschlüsselungsmodul (DD) einen Schlüssel umfasst, um die Unterschrift der Daten der übertragenen Liste zu entschlüsseln oder zu überprüfen.

11. Verfahren nach einem der Ansprüche 8 bis 9, **gekennzeichnet dadurch, dass** die Liste der Identifizierungen (CAS ID1...CAS IDn) eine sogenannte positive Liste ist, das heißt sie umfasst die zur Schaffung des persönlichen Schlüssels berechtigten Identifizierungen.

12. Verfahren nach einem der Ansprüche 8 bis 9, **gekennzeichnet dadurch, dass** die Liste der Identifizierungen (CAS ID1...CAS IDn) eine sogenannte negative Liste ist, das heißt sie umfasst die Identifizierungen, denen die Schaffung des persönlichen Schlüssels verboten ist.

13. Dekompressions- und Entschlüsselungsmodul (DD), das in eine Multimedia-Verarbeitungsanlage (STB) montiert wird und eine zentralen Einheit umfasst, ein Entschlüsselungsmodul, ein Dekompressionsmodul, mindestens einen persönlichen Schlüssel (RK), Mittel zur Erzeugung eines gesicherten Schlüssels (VK), berechnet aus einer unidirektionalen Funktion, basierend auf dem persönlichen Schlüssel (RK) und auf einer Kennung (CAS ID), die in einem Sicherheitsmodul (M) enthalten ist und von besagtem Dekompressions- und Entschlüsselungsmodul (DD) empfangen wird, wobei das Sicherheitsmodul (M) dazu bestimmt ist, mit der Multimedia-Verarbeitungsanlage (STB) verbunden zu sein, um Berechtigungsfunktionen zu garantieren, **gekennzeichnet dadurch, dass** es außerdem dazu bestimmt ist, vom genannten Sicherheitsmodul (M) Daten zu empfangen, die von einem selben Sicherheitsschlüssel (VK) verschlüsselt wurden, der von einem Verwaltungszentrum berechnet und in das Sicherheitsmodul (M) geladen wurde.

14. Dekompressions- und Entschlüsselungsmodul (DD) nach Anspruch 13, **gekennzeichnet dadurch, dass** es einen Speicher umfasst, der eine Liste von Identifizierungen (CAS ID1...CAS IDn) enthält sowie Mittel zur Prüfung der Konformität der Identifizierung, die vom Sicherheitsmodul empfangen wurde, durch Vergleich mit dieser Liste.

15. Dekompressions- und Entschlüsselungsmodul (DD) nach Anspruch 13 oder 14, **gekennzeichnet dadurch, dass** es einen gemeinsamen Schlüssel umfasst sowie Mittel, um die Liste der empfangenen Identifizierungen (CAS ID1...CAS IDn) zu entschlüsseln oder zu überprüfen.

## Claims

1. Method for securing data exchanged between a multimedia processing device (STB) and a security module (M), the security module (M) being managed by a management centre having a list of personal keys (PK) related to the multimedia processing device (STB), the management center being requested for establishing of security parameters between said multimedia processing device and an operator, the multimedia processing device (STB) receiving a stream of encrypted multimedia data and being responsible for decrypting and converting this data with decryption keys provided by the security module (M) for rendering them readable, said multimedia processing device comprising a personal key (RK), this method is **characterized in that** it comprises the following steps:
- calculating by the management center, of a security key (VK) formed by a one-way function based on the personal key (RK) of the multimedia processing device (STB) and on the entity identifier (CAS_ID) allocated by said management center to the operator,
- loading said security key (VK) into the security module (M), said security module containing the entity identifier (CAS_ID),
- obtaining, by the multimedia processing device (STB), the entity identifier (CAS_ID) contained in said security module (M),
- calculating, by said multimedia processing device (STB), said security key (VK) by a one-way function based on the personal key (RK) of said multimedia processing device (STB) and the entity identifier (CAD_ID) obtained by the multimedia processing device,
- using the security key (VK) for securing the data exchanged between the multimedia processing device (STB) and the security module (M).

2. Method according to claim 1, **characterized in that** the security module (M) transmits the entity identifier (CAS_ID) to said multimedia processing device (STB).

3. Method according to claim 1, **characterized in that** the multimedia processing device (STB) obtains the entity identifier (CAS_ID) by extracting of said identifier (CAS_ID) from the received data stream.

4. Method according to claims 1 to 3, **characterized in that** the multimedia processing device (STB) comprises a deciphering and decompression module (DD) in which the personal key (RK) is initialized.

5. Method according to claim 4, **characterized in that** it comprises a verification step of the identity of the security key (VK) in the security module (M) and in the deciphering and decompression module (DD) by the encryption with said key of a message containing at least one part predefined by the security module (M), and verification of this predefined part after decryption by the deciphering and decompression module (DD).

6. Method according to one claims 1 to 5, **characterized in that** the one-way function is a hash function or hash MAC function.

7. Method according to one of the claims 1 to 5, **characterized in that** the one-way function is an encryption function of the entity identifier (CAS_ID) by the personal key (RK).

8. Method according to one of the claims 4 to 7, **characterized in that** the deciphering and decompression module (DD) comprises a list of entity identifiers (CAS_ID1...CAS_IDn), this deciphering and decompression module (DD) verifying the conformity of the identifier received from the security module (M) in comparison with this list.

9. Method according to claim 8, **characterized in that** the multimedia processing device (STB) receives multimedia data comprising the data allowing this list of identifiers (CAS_ID1...CAS_IDn) to be formed.

10. Method according to claims 8 or 9, **characterized in that** the deciphering and decompression module (DD) includes a key to decrypt or verify the signature of the data of the transmitted list.

11. Method according to one of the claims 8 to 9, **characterized in that** the list of identifiers (CAS_ID1...CAS_IDn) is called a positive list, that is to say comprising the identifiers authorized for the creation of the personal key.

12. Method according to one of the claims 8 to 9, **characterized in that** the list of identifiers (CAS_ID1...CAS_IDn) is called a negative list, that is to say comprising the identifiers prohibited for the creation of the personal key.

13. Deciphering and decompression module (DD) intended to be mounted in a multimedia processing device (STB) and comprising a central unit, a deciphering module, a decompression module and at least one personal key (RK), and means to generate a security key (VK) calculated with a one-way function based on the personal key (RK) and a entity identifier (CAS_ID) stored in a security module (M) and received by said deciphering and decompression module (DD), said security module (M) being intended to be connected to the multimedia processing device (STB) to carry out authorization functions, **characterized in that** it further comprises means to received from said security module (M) data encrypted by a same security key (VK) calculated by a management center and loaded into said security module (M).

14. Deciphering and decompression module (DD) according to claim 13, **characterized in that** it comprises a memory containing a list of identifiers (CAS_ID1...CAS_IDn) and verification means of the conformity of the identifier received from the security module in comparison with this list.

15. Deciphering and decompression module (DD) according to claim 13 or 14, **characterized in that** it comprises a common key and the means to decrypt or verify the list of the received identifiers (CAS_ID1...CAS_IDn).
